# EUROPÄISCHE PATENTSCHRIFT

(11) **EP 3 545 593 B1**
(45) Veröffentlichungstag und Bekanntmachung des Hinweises auf die Patenterteilung: **29.04.2026**
(21) Anmeldenummer: 17808313.5
(22) Anmeldetag: 21.11.2017
(51) Int. Cl.: H02G 1/00, B63G 8/00

(54) **UNTERWASSERFAHRZEUG MIT DRUCKBEHÄLTER**
UNDERWATER CRAFT COMPRISING A PRESSURE VESSEL
VÉHICULE SOUS-MARIN DOTÉ D'UN COMPARTIMENT PRESSURISÉ

(30) Priorität: 23.11.2016 DE 102016122601
(43) Veröffentlichungstag der Anmeldung: 02.10.2019
(73) Patentinhaber: TKMS ATLAS ELEKTRONIK GmbH, 28309 Bremen (DE)
(72) Erfinder: HECHT, Markus, 27721 Ritterhude (DE); WOLK, Klaus-Dieter, 28832 Achim (DE); MICHAELIS, Ulrike, 28816 Stuhr (DE)
(74) Vertreter: thyssenkrupp Intellectual Property GmbH
(86) Internationale Anmeldenummer: PCT/DE2017/101003
(87) Internationale Veröffentlichungsnummer: WO 2018/095484

(56) Entgegenhaltungen:
- WO-A1-2006/084499
- DE-A1- 102011 009 283
- DE-B3- 102006 045 686
- US-A- 3 171 281

## Beschreibung

Die Erfindung betrifft ein Unterwasserfahrzeug mit Druckbehälter, welcher einen Innenbereich und einen Außenbereich aufweist, wobei eine elektronische Durchkontaktierung eine elektronische Komponente im Innenbereich mit einer im Außenbereich angeordneten Modulaufnahme verbindet. Ein Unterwasserfahrzeug entsprechend dem Stand der Technik ist beispielsweise in Dokument US3171281 offenbart.

In einem Unterwasserfahrzeug wie beispielsweise einem U-Boot ist es zwingend notwendig Sensoren und Aktuatoren, wie beispielsweise Hydrophone, im Außenbereich mit elektronischen Rechnern im Innenbereich zu verbinden. Mithin muss regelmäßig eine leitungsbasierte Verbindung vom Innenbereich zum Außenbereich, oder entsprechend umgekehrt, realisiert werden. Dabei werden möglichst viele Aufgaben und Funktionen, welche einer elektronische Aufbereitung oder einer elektronischen Verarbeitung bedürfen, entweder in den Innenbereich eines Druckbehälters verortet, oder, falls sie außerhalb angeordnet werden müssen, beispielsweise durch Vergießen vor dem umgebenden Wasser geschützt werden.

Gerade vergossene Elektronik, wie beispielsweise eine Signalkonditionierung, ist im Defektfall schwer auszutauschen. Dies geht einher mit hohem mechanischem Aufwand die Elektronik zu entfernen und durch eine neue Elektronik zu ersetzen, welche anschließend erneut vergossen werden muss. Auch kann beispielsweise eine verbesserte Elektronik nicht leicht eingesetzt beziehungsweise eine zusätzliche Elektronik eingebracht werden, da dies im Regelfall größere Aufwände nach sich zieht.

### Aufgabe der Erfindung ist es den Stand der Technik zu verbessern

Gelöst wird die Aufgabe durch ein Unterwasserfahrzeug mit Druckbehälter, welcher einen Innenbereich und einen Außenbereich aufweist, wobei eine elektronische Durchkontaktierung eine elektronische Komponente im Innenbereich mit einer im Außenbereich angeordneten Modulaufnahme verbindet, wobei die Modulaufnahme in einem wasserdichten Behälter mit einem Behältergehäuse angeordnet ist.

Durch die vorliegende Modulaufnahme können beliebige Elektronikschaltungen quasi in einem "kleinen" separaten und von außen zugänglichen " gesonderten Druckbehälter" vorgesehen werden, bei dem ein Upgrade der Elektronik oder ein Ersetzen der Elektronik leicht und schnell realisierbar ist.

### Folgendes Begriffliche sei erläutert:

Ein "Unterwasserfahrzeug" ist insbesondere ein U-Boot, ein AUV (Autonomous Underwater Vehicle) oder ein ROV (Remotely Operated Vehicle). Derartige Unterwasserfahrzeuge weisen einen "Druckbehälter" auf, in welchem beispielsweise die Elektronik in einem geschützten Raum angeordnet ist oder ein geschützter Raum für Personal bereitgestellt wird. Im Allgemeinen ist der Druckbehälter mit einem Luftgemisch geflutet, welches beispielsweise atembare Luft umfasst.

Der Druckbehälter weist einen "Innenbereich" auf. Dieser Innenbereich bildet den für die Elektronik oder einen für die Personen geschützten Raum. Wird beispielsweise ein Sonar eingesetzt, so befindet sich in diesem Innenbereich sehr häufig die entsprechende Auswerteelektronik oder es werden in diesem Bereich den Bedienern die entsprechenden Sonarsignale aufbereitet angezeigt.

Der "Außenbereich" des Druckbehälters ist im Wesentlichen der Bereich, welcher mit dem umgebenden Wasser in Kontakt treten kann. Dieser Kontakt kann permanent im Tauchfall eintreten oder auch nur teilweise vorgesehen sein, wie beispielsweise separate Vorrichtungen, über welche ein Unterwasserlaufkörper ausgebracht werden kann.

Eine "elektronische Durchkontaktierung" ist insbesondere eine leitungsbasierte (und somit häufig kabelbasierte) Verbindung elektronischer Bauteile, welche den Innenbereich mit dem Außenbereich verbindet. Beispielsweise können bei einem Sonar Hydrophone im Außenbereich angeordnet sein, deren Signale mittels der Durchkontaktierung in den Innenbereich des Druckbehälters geführt werden und dort mittels einer Elektronik ausgewertet und einem Bediener angezeigt werden. Die Durchkontaktierung kann dabei segmentiert sein und entsprechende Steckerelemente und dergleichen aufweisen. Beispielsweise kann auch ein derartiges Steckerelement den wasserdichten Behälter bilden. Weiterhin können über diese Durchkontaktierung sowohl elektrische Energie als auch Datensignale übertragen werden.

Eine elektronische Komponente kann sowohl Sensoren als auch Aktuatoren oder sonstige elektronische Schaltungen oder Bauteile wie beispielsweise elektronische Rechner umfassen.

Die "Modulaufnahme" ist insbesondere ein Adapter, welcher eine elektronische Schaltung aufnimmt oder über den eine elektronische Beschaltung, wie beispielsweise mittels eines mechanischen Schalters, realisiert werden kann. Mittels dieser Modulaufnahme können sowohl bei der Durchkontaktierung in Reihe geschaltete Elektronik oder auch parallel dazu geschaltete Elektronik und elektronische Schaltbauteile, wie beispielsweise Schaltplatinen, eingebracht werden.

Der "wasserdichte Behälter" bildet mit seinem "Behältergehäuse" einen separaten (kleinen) Druckbehälter, welcher außerhalb des eigentlichen Druckbehälters angeordnet ist. Dieser Behälter ist vor eindringendem Wasser geschützt und die darin befindliche Modulaufnahme ist leicht zugänglich.

In einer weiteren Ausführungsform weist der Behälter einen Verschluss auf, sodass eine Elektronikschaltung in den Behälter und somit in das Modul einbringbar oder austauschbar ist. Somit kann beispielsweise durch einen Steckvorgang eine Elektronik in die Adapterschaltung eingebracht werden. Auch kann eine bestehende Elektronikschaltung dort aus dem Adapter entfernt und durch eine andere identische oder verbesserte Elektronikschaltung ersetzt werden. Mithin kann der Verschluss beispielsweise durch Sicherungsmittel, wie einem O-Ring, gegen das Eindringen von Umgebungswasser geschützt werden. Zudem ist beispielsweise dieser Verschluss ein Drehverschluss, welcher im Bedarfsfall leicht gelöst und geöffnet und anschließend wieder verschlossen werden kann.

Um einen effektiven elektrischen Masseanschluss für die Modulaufnahme und somit für etwaige Elektronikschaltungen bereitstellen zu können, ist der wasserdichte Behälter insbesondere mit seinem Gehäuse, elektronisch auf Masse geschaltet. Dabei kann beispielsweise der Behälter selbst aus einem elektrisch leitenden Material gefertigt sein oder zumindest elektrisch leitendes Material teilweise aufweisen, welches im Kontaktfall die Massebeschaltung realisiert.

In einer diesbezüglichen Ausführungsform könnte der wasserdichte Behälter und/oder kann die Modulaufnahme einen Kontaktstift aufweisen, welcher in einem Verschlussfall des Behälters eine elektronische Massebeschaltung zwischen einer Elektronikschaltung, welche in die Modulaufnahme eingebracht ist, und den wasserdichten Behälter realisieren. Dabei können die Elektronikschaltungen beispielsweise auf einer Platine angeordnet sein, welche entsprechende Kontaktstifte aufweist. Diese können in die Modulaufnahme elektrisch leitend steckbar eingefügt werden.

Damit eine wirksame Beschaltung erfolgen kann, weist die Modulaufnahme eine Elektronikschaltung auf.

Dabei kann die Elektronikschaltung reversibel und zerstörungsfrei entfernbar, insbesondere steckbar, ausgestaltet sein. Somit kann eine Elektronikschaltung im Defektfall leicht durch eine identische Elektronikschaltung ersetzt oder allgemein durch eine andere Elektronikschaltung ausgetauscht werden.

Insgesamt kann das schnelle Öffnen, die leichte Zugänglichkeit, das leichte Entfernen der Elektronikschaltung und das damit einhergehende schnelle Ersetzen der Elektronikschaltungen und das anschließende Verschließen zeitoptimiert realisiert werden.

Um beispielsweise die einzelnen Funktionalitäten eines Sonars dezidiert für einen Bediener freischalten zu können, kann die Elektronikschaltung eine Kopierschutzeinrichtung, insbesondere einen Kopierschutzstecker, aufweisen. So kann beispielsweise ein grundsätzlich aktives Sonar, welches bisher von dem Benutzer als passives Sonar verwendet wird, durch den Kopierschutzstecker, welcher englischsprachig auch "Dongle" genannt wird, in ein aktives Sonar umfunktioniert werden.

Um eine Dichtigkeitsprüfung des wasserdichten Behälters insbesondere nach einem Austausch oder Prüfung der Überspannungsschutzeinrichtung durchzuführen, weist der wasserdichte Behälter einen Behälterkammer und ein Behälteraußenbereich auf, wobei eine Fluidverbindung die Behälterkammer mit dem Behälteraußenbereich verbindet.

Wird nun über die Fluidverbindung Druck (z.B. mittels Pressluft) der Behälterkammer aufgeprägt, kann über Leckraten die Dichtigkeit des wasserdichten Behälters geprüft werden.

In einer diesbezüglichen Ausführungsform kann die Behälterkammer eine zusätzliche, separate Prüfkammer aufweisen, sodass neben der Prüfkammer eine übrige Behälterkammer vorgesehen ist, und die Fluidverbindung die Prüfkammer mit dem Behälteraußenbereich verbindet. Insbesondere ist ein Prüfkammervolumen deutlich keiner als die übrige Behälterkammer. Das Verhältnis von Prüfkammer zur übrigen Behälterkammer ist insbesondere kleiner 1 : 5 und besonders bevorzugt kleiner 1 : 10. Je besser das Verhältnis ist, desto schneller kann eine Dichtigkeitsprüfung erfolgen. Zudem kann dabei auch die Dichtigkeit zwischen Prüfkammer und übriger Behälterkammer geprüft werden.

Um sowohl die Dichtigkeit zum Verschluss als auch zur übrigen Behälterkammer zu prüfen, kann die zusätzliche, separate Prüfkammer zwischen dem Verschluss und der übrigen Behälterkammer angeordnet sein. So kann ein O-Ring zum Verschluss und ein weiterer O-Ring die übrige Behälterkammer abdichten.

Erfindungsgemäß weist die Fluidverbindung ein Ventil auf. So kann die Fluidverbindung abgedichtet und eine Prüfung realisiert werden. Dabei kann sowohl ein Einwegeventil als auch ein schaltbares Ventil vorgesehen sein.

Insbesondere bei einem U-Boot kann der Behälter in einem oberen Bereich des Unterwasserfahrzeuges anordnet sein, sodass in einem Auftauchfall der wasserdichte Behälter frei von Wasserbenetzung zugänglich ist.

Somit ist es nicht mehr notwendig mit dem U-Boot in eine Werft zu fahren, um entsprechend die Elektronik auszutauschen oder zu adaptieren.

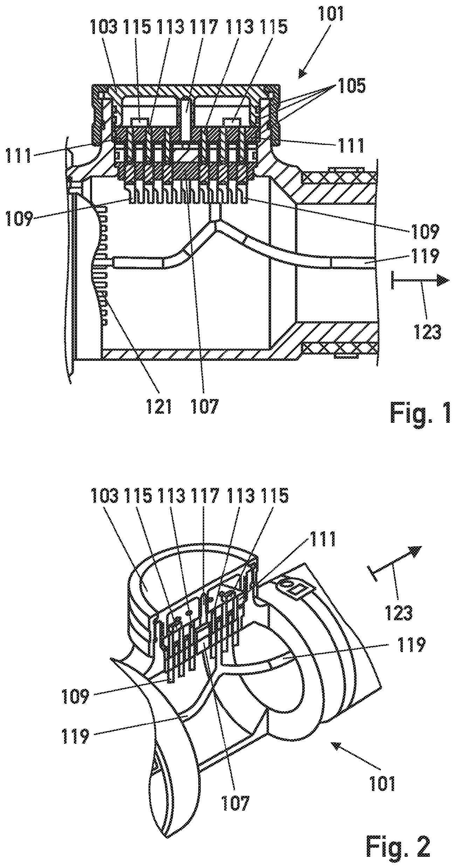

Im Weiteren wird die Erfindung anhand von Ausführungsbeispielen erläutert. Es zeigen
- Figur 1: eine schematische Schnittdarstellung durch einen Behälterstecker, in welchem in einem Adapter eine EMP-Schutzschaltung auf einer Platine steckbar angeordnet ist, in einem geschlossenen Behälterzustand,
- Figur 2: eine schematische, perspektivische, dreidimensionale geschnittene Darstellung des Behältersteckers aus Figur 1 und

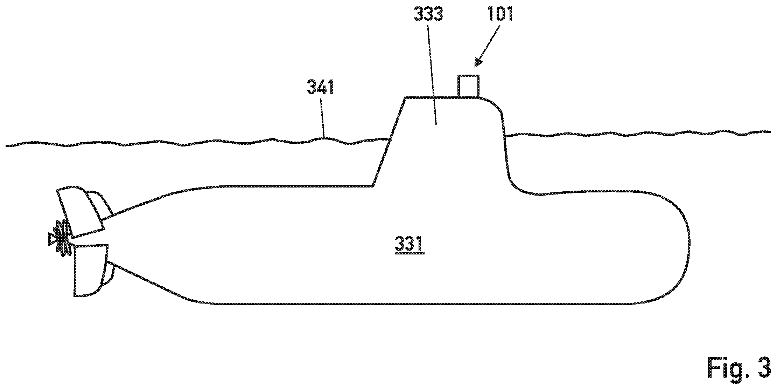

- Figur 3: eine stark schematische Darstellung eines teilgetauchten U-Bootes mit einem Behälterstecker gemäß Figur 1

Ein Steckerhäuse 101 weist in seinem oberen Bereich einen Deckel 103 auf. Zwischen dem Steckergehäuse 101 und dem Deckel 103 sind Gewinde (nicht dargestellt) angeordnet, sodass der Deckel mittels Drehen reversibel auf das Steckergehäuse 101 aufbringbar ist. Zudem sind O-Ringe 105 angeordnet, welche das Eindringen von Wasser von Außen in das Steckergehäuseinnere vermeiden.

Im Inneren des Steckergehäuses 101 ist eine Platinenaufnahme 107 angeordnet, welche mehrere Kontaktierstifte 109 aufweist, an welche ein Signalkabel 119 angelötet ist. Zudem ist im Inneren des Steckergehäuses 101 eine Platine 111 mit TVS-Dioden 115 und Stiftkontakten angeordnet. Die Platine 111 wurde mittels der Stiftkontakte 113 in die Platinenaufnahme 107 eingedrückt, sodass eine elektronische Verbindung gegeben ist.

Weiterhin weist der Deckel 103 einen Kontaktbolzen 117 auf, welcher im verschlossenen Zustand eine elektronische Masseleitung mit der Platinenaufnahme 107 realisiert.

Das Signalkabel 119 verbindet Hydrophone (nicht dargestellt) und somit die Hydrophonseite 123 mit der Innenbordkontaktierung 121 welche in das Innere des U-Boots 331 und dort in eine Sonaranlage (nicht dargestellt) weitergeführt wird.

Die TVS-Dioden 115 sind parallel zum Signalkabel 119 geschaltet. Mithin schalten somit die TVS-Dioden 115 das Signalkabel 119 über den Kontaktbolzen 117 und den Deckel 103 des Steckergehäuses 101 auf elektronische Masse.

Tritt nun ein EMP-Ereignis ein, wirkt die gesamte vorliegende elektronische Schaltung quasi als Antenne und es werden hohe Spannungen induziert. Wird nun die mittels der TVS-Dioden 115 eingestellte Spannungsschwelle überschritten, werden die TVS-Dioden 115 leiten und somit wird die Überspannung auf Masse geleitet und gelangt nicht in das Innere des U-Bootes und kann somit innerhalb des U-Boots keinen Schaden anrichten.

Nach Eintritt dieses EMP-Ereignisses und den dadurch gegebenenfalls zerstörten TVS-Dioden 115 soll vorliegend die Platine 111 ausgetauscht werden.

Dazu taucht das U-Boot 331 an die Wasseroberfläche 341 auf, sodass der Turm 333 aus dem Wasser ragt. Das Steckergehäuse 101 ist am Turm 333 des U- Bootes 331 angeordnet. Im aufgetauchten Fall öffnet eine Person den Ausstieg (nicht dargestellt) zum Turm und hat manuellen Zugriff zum Steckergehäuse 101. Nun dreht die Person den Deckel 103 vom Steckergehäuse 101 ab.

Anschließend wird die defekte Platine 111 von der Platinenaufnahme 107 abgezogen. Eine neue funktionstüchtige Platine 111 mit funktionsfähigen TVS-Dioden 115 wird an die gleiche Stelle der Platinenaufnahme 107 durch Drücken eingesteckt. Anschließend werden die O-Ringe 105 geprüft und gegebenenfalls durch neue O-Ringe ersetzt. Anschließend wird der Deckel 103 wieder fest verschraubt, sodass der Kontaktbolzen 117 wieder mit der Platine 111 leitend verbunden ist.

Alternativ wird eine andere Schaltung eingesetzt. In einer weiteren Alternative weist die Platine 111 eine Elektronik auf, welche das bestehende Sonarsystem (nicht dargestellt) verbessert. Zudem kann in die Platinenaufnahme 107 ein Dongel eingesetzt werden.

### Bezugszeichenliste

- 101: Steckergehäuse
- 103: Deckel
- 105: O-Ring
- 107: Platinenaufnahme
- 109: Kontaktierstifte
- 111: Platine
- 113: Stiftkontakte
- 115: TVS-Diode
- 117: Kontaktbolzen
- 119: Signalkabel
- 121: Innenbordkontaktierung
- 123: Hydrophon
- 331: U-Boot
- 333: Turm
- 341: Wasseroberfläche

## Patentansprüche

1. Unterwasserfahrzeug (331) mit Druckbehälter, welcher einen Innenbereich und einen Außenbereich aufweist, wobei eine elektronische Durchkontaktierung eine elektronische Komponente im Innenbereich mit einer im Außenbereich angeordneten Modulaufnahme verbindet, wobei die Modulaufnahme in einem wasserdichten Behälter mit einem Behältergehäuse (101) angeordnet ist, **dadurch gekennzeichnet, dass** der wasserdichte Behälter eine Behälterkammer und einen Behälteraußenbereich aufweist, wobei eine Fluidverbindung zur Durchführung einer Dichtigkeitsprüfung des wasserdichten Behälters die Behälterkammer mit dem Behälteraußenbereich verbindet, wobei die Fluidverbindung ein Ventil aufweist und wobei das Behältergehäuse einen separaten Druckbehälter ausbildet, welcher außerhalb des eigentlichen Druckbehälters angeordnet ist.

2. Unterwasserfahrzeug nach Anspruch 1, **dadurch gekennzeichnet, dass** der Behälter einen Verschluss aufweist, sodass eine Elektronikschaltung in den Behälter einbringbar und/oder austauschbar ist.

3. Unterwasserfahrzeug nach einem der vorherigen Ansprüche, **dadurch gekennzeichnet, dass** der wasserdichte Behälter, insbesondere mit seinem Gehäuse, elektronisch auf Masse geschaltet ist.

4. Unterwasserfahrzeug nach Anspruch 3, **dadurch gekennzeichnet, dass** die Modulaufnahme elektronisch mittels des wasserdichten Behälters auf elektronischer Masse geschaltet ist.

5. Unterwasserfahrzeug nach Anspruch 3 oder 4, **dadurch gekennzeichnet, dass** der wasserdichte Behälter und/oder die Modulaufnahme einen Kontaktstift aufweist, welcher in einem Verschlussfall des Behälters eine elektronische Massebeschaltung zwischen einer Elektronikschaltung welche in die Modulaufnahme eingebracht ist, und dem wasserdichten Behälter realisiert.

6. Unterwasserfahrzeug nach einem der vorherigen Ansprüche, **dadurch gekennzeichnet, dass** die Modulaufnahme eine Elektronikschaltung aufweist.

7. Unterwasserfahrzeug nach Anspruch 6, **dadurch gekennzeichnet, dass** die Elektronikschaltung reversibel und zerstörungsfrei entfernbar, insbesondere steckbar, ausgestaltet ist.

8. Unterwasserfahrzeug nach einem der Ansprüche 6 oder 7, **dadurch gekennzeichnet, dass** die Elektronikschaltung eine Kopierschutzeinrichtung, insbesondere ein Kopierschutzstecker, aufweist.

9. Unterwasserfahrzeug nach einem der vorherigen Ansprüche, **dadurch gekennzeichnet, dass** die Behälterkammer eine zusätzliche, separate Prüfkammer aufweist, sodass neben der Prüfkammer eine übrige Behälterkammer vorgesehen ist, und die Fluidverbindung die Prüfkammer mit dem Behälteraußenbereich verbindet.

10. Unterwasserfahrzeug nach Anspruch 9, **dadurch gekennzeichnet, dass** die zusätzliche, separate Prüfkammer zwischen dem Verschluss und der übrigen Behälterkammer angeordnet ist.

11. Unterwasserfahrzeug nach einem der vorherigen Ansprüche, **dadurch gekennzeichnet, dass** der Behälter in einem oberen Bereich des Unterwasserfahrzeugs angeordnet ist, sodass in einem Auftauchfall der wasserdichte Behälter frei von Wasserbenetzung zugänglich ist.

## Claims

1. Underwater vehicle (331) with a pressure vessel having an interior and an exterior, wherein an electronic through-connection connects an electronic component in the interior to a module receptacle arranged in the exterior, wherein the module receptacle is arranged in a watertight container with a container housing (101), **characterised in that** the watertight container has a container chamber and a container outer region, wherein a fluid connection for carrying out a leak test of the watertight container connects the container chamber to the container outer region, wherein the fluid connection has a valve, and wherein the container housing forms a separate pressure vessel which is arranged outside the actual pressure vessel.

2. Underwater vehicle according to claim 1, **characterised in that** the container has a closure so that an electronic circuit can be introduced into the container and/or exchanged.

3. Underwater vehicle according to one of the previous claims, **characterised in that** the watertight container, in particular with its housing, is electronically connected to ground.

4. Underwater vehicle according to claim 3, **characterised in that** the module receptacle is electronically connected to ground by means of the watertight container.

5. Underwater vehicle according to claim 3 or 4, **characterised in that** the watertight container and/or the module holder has a contact pin which, when the container is closed, realises an electronic ground connection between an electronic circuit which is introduced into the module holder and the watertight container.

6. Underwater vehicle according to one of the previous claims, **characterised in that** the module receiver has an electronic circuit.

7. Underwater vehicle according to claim 6, **characterised in that** the electronic circuit is designed to be reversibly and non-destructively removable, in particular pluggably.

8. Underwater vehicle according to one of the claims 6 or 7, **characterised in that** the electronic circuit has an anti-copying device, in particular an anti-copying plug.

9. Underwater vehicle according to one of the previous claims, **characterised in that** the container chamber has an additional, separate test chamber, so that an additional container chamber is provided next to the test chamber, and the fluid connection connects the test chamber to the outer area of the container.

10. Underwater vehicle according to claim 9, **characterised in that** the additional, separate test chamber is arranged between the closure and the additional container chamber.

11. underwater vehicle according to one of the previous claims, **characterised in that** the container is arranged in an upper region of the underwater vehicle so that, in the event of surfacing, the watertight container is accessible without being wetted by water.

## Revendications

1. Véhicule sous-marin (331) comprenant un récipient sous pression ayant un intérieur et un extérieur, dans lequel une connexion traversante électronique relie un composant électronique situé à l'intérieur à un réceptacle de module disposé à l'extérieur, le réceptacle de module étant disposé dans un conteneur étanche avec un boîtier de conteneur (101), **caractérisé en ce que** le conteneur étanche présente une chambre de conteneur et une région externe du conteneur, une connexion de fluide destinée à réaliser un test d'étanchéité du conteneur étanche reliant la chambre du conteneur à la région externe du conteneur, la connexion de fluide comportant une vanne, et le boîtier du conteneur formant un récipient sous pression séparé disposé à l'extérieur du récipient sous pression proprement dit.

2. Véhicule sous-marin selon la revendication 1, **caractérisé en ce que** le conteneur comporte une fermeture permettant d'introduire et/ou de remplacer un circuit électronique dans le conteneur.

3. Véhicule sous-marin selon l'une des revendications précédentes, **caractérisé en ce que** le conteneur étanche, en particulier son boîtier, est relié électriquement à la masse.

4. Véhicule sous-marin selon la revendication 3, **caractérisé en ce que** le réceptacle de module est relié électriquement à la masse au moyen du conteneur étanche.

5. Véhicule sous-marin selon la revendication 3 ou 4, **caractérisé en ce que** le conteneur étanche et/ou le support de module comporte une broche de contact qui, lorsque le conteneur est fermé, réalise une connexion électrique à la masse entre un circuit électronique introduit dans le support de module et le conteneur étanche.

6. Véhicule sous-marin selon l'une des revendications précédentes, **caractérisé en ce que** le récepteur de module comporte un circuit électronique.

7. Véhicule sous-marin selon la revendication 6, **caractérisé en ce que** le circuit électronique est conçu pour être retiré de manière réversible et non destructive, en particulier par enfichage.

8. Véhicule sous-marin selon l'une des revendications 6 ou 7, **caractérisé en ce que** le circuit électronique comporte un dispositif anti-copie, en particulier une fiche anti-copie.

9. Véhicule sous-marin selon l'une des revendications précédentes, **caractérisé en ce que** la chambre du conteneur comporte une chambre d'essai supplémentaire distincte, de sorte qu'une chambre de conteneur supplémentaire est prévue à côté de la chambre d'essai, et que la connexion de fluide relie la chambre d'essai à la région externe du conteneur.

10. Véhicule sous-marin selon la revendication 9, **caractérisé en ce que** la chambre d'essai supplémentaire distincte est disposée entre la fermeture et la chambre de conteneur supplémentaire.

11. Véhicule sous-marin selon l'une des revendications précédentes, **caractérisé en ce que** le conteneur est disposé dans une région supérieure du véhicule sous-marin de sorte que, en cas de remontée à la surface, le conteneur étanche est accessible sans être mouillé par l'eau.
